# FASCICULE DE BREVET EUROPEEN

(11) **EP 3 145 763 B1**
(45) Date de publication et mention de la délivrance du brevet: **11.07.2018**
(21) Numéro de dépôt: 15731689.4
(22) Date de dépôt: 22.05.2015
(51) Int. Cl.: B60T 1/06, F16D 55/08, F16D 65/18, B66C 13/18, B66C 15/00, B60T 13/04, H02K 7/102

(54) **FREIN POUR UN MACHINE ELECTRIQUE ET MACHINE ELECTRIQUE EQUIPEE D'UN TEL FREIN**
ELEKTROMOTORBREMSE UND ELEKTRISCHE MASCHINE MIT SO EINER BREMSE
BRAKE FOR ELECTRIC MACHINE AND ELECTRIC MACHINE EQUIPPED WITH SUCH A BRAKE

(30) Priorité: 23.05.2014 FR 1454664
(43) Date de publication de la demande: 29.03.2017
(73) Titulaire: Moteurs Leroy-Somer, 16915 Angouleme Cedex 9 (FR)
(72) Inventeur: FOUILLET, Patrice, F-16430 Champniers (FR); CARRIOT, Pascal, F-16400 La Couronne (FR); SAUNIER, François, F-16430 Champniers (FR)
(74) Mandataire: Nony
(86) Numéro de dépôt international: PCT/IB2015/053784
(87) Numéro de publication internationale: WO 2015/177767

(56) Documents cités:
- EP-A1- 1 503 482
- EP-A1- 1 655 009
- DE-A1-102011 016 892
- US-A- 5 915 507
- US-A1- 2003 057 037

## Description

La présente invention concerne les freins pour moteurs électriques et les machines électriques équipées de tels freins, et plus particulièrement mais non exclusivement les freins à manque de courant équipant les moteurs utilisés dans les grues pour entraîner en rotation la flèche relativement à la tour ou dans les éoliennes pour entrainer en rotation la nacelle relativement au mat.

Le frein est dit à manque de courant lorsque son ou ses armatures passent dans une position inactive quand l'électroaimant est alimenté, la ou les armatures étant appliquées contre un disque de frein par un ou plusieurs ressorts de poussée en l'absence d'alimentation de l'électroaimant.

Il existe des situations où le frein doit être maintenu dans une position inactive afin de permettre une libre rotation du moteur en l'absence de courant, par exemple dans le cas où le moteur équipe une grue, afin d'amener la flèche à s'orienter librement dans la direction du vent en cas de tempête notamment, et d'éviter le risque de chute de la grue.

Pour ce faire, différents systèmes mécaniques ont été proposés, qui visent à bloquer la ou les armatures du frein en position inactive même en l'absence d'alimentation électrique de l'électroaimant du frein.

Les systèmes existants sont relativement complexes et coûteux et de plus, peuvent s'avérer relativement encombrants ou d'accès malaisé, ce qui rend plus difficile l'implantation de la machine électrique dans la grue par exemple.

L'invention vise à perfectionner encore les freins pour moteurs électriques, notamment afin de diminuer l'encombrement de la machine équipée d'un tel frein et/ou faciliter sa mise en place.

En outre, certains systèmes de l'art antérieur peuvent perturber les flux d'air de refroidissement du moteur et nécessiter une manipulation complexe pour débloquer manuellement le frein. US 5915507 A décrit l'état de la technique. L'invention a ainsi pour objet un frein pour moteur électrique, comportant :
a) une culasse,
b) au moins un disque de frein destiné à être entraîné en rotation avec l'arbre du moteur électrique,
c) au moins une armature mobile axialement relativement à la culasse entre une position de freinage où elle s'applique contre le disque de frein et une position inactive écartée du disque de frein,
d) au moins un élément de retenue mobile axialement avec l'armature,
e) au moins un ressort tendant à maintenir l'armature en position de freinage,
f) un électroaimant sollicitant, lorsqu'il est alimenté en courant, l'armature en position inactive, et
g) un système de verrouillage de l'armature en position inactive, le système de verrouillage comportant un organe de verrouillage déplaçable entre une position verrouillée où il coopère avec l'élément de retenue pour retenir l'armature en position inactive contre l'action de rappel du ou des ressort(s) et une position déverrouillée de libération de l'armature permettant le retour de l'armature en position de freinage.

Grâce à l'invention, on bénéficie d'un mécanisme compact, fiable et facile à commander, soit électriquement, soit manuellement, directement ou par l'intermédiaire d'un câble de commande.

L'invention peut s'appliquer à un ou plusieurs freins associés à un même moteur électrique.

En variante, le frein peut comporter plusieurs disques de freins et/ou plusieurs armatures.

L'invention présente de nombreux avantages, et notamment le frein peut être réalisé, si cela est recherché, de façon à être aisément utilisable dans toutes les positions. La manoeuvre manuelle peut être relativement simple du fait que les différents organes à manipuler peuvent être réalisés proches les uns des autres si cela est souhaité.

L'élément de retenue peut comporter de préférence une tige coulissant dans la culasse, de préférence dépassant axialement de celle-ci vers l'arrière.

L'organe de verrouillage comporte de préférence un bras coopérant avec l'élément de retenue pour retenir l'armature en position inactive contre l'action de rappel du ou des ressort(s) précité(s).

Le frein peut comporter deux éléments de retenue mobiles avec l'armature, de préférence disposés symétriquement l'un par rapport à l'autre par rapport à l'axe de rotation du moteur, et de préférence coopérant avec le même organe de verrouillage.

L'organe de verrouillage peut comporter deux bras coopérant, en position verrouillée, chacun avec un élément de retenue respectif, ces deux bras étant de préférence réalisés d'une seule pièce l'un avec l'autre.

L'organe de verrouillage est de préférence rotatif autour d'un pivot, de préférence autour d'un axe de rotation parallèle à celui du moteur, et de préférence encore non confondu avec celui-ci.

Le frein peut comporter un organe de rappel élastique de l'organe de verrouillage, tendant à ramener l'organe de verrouillage dans sa position déverrouillée de libération de l'armature.

Le frein peut comporter une butée contre laquelle repose l'organe de verrouillage en position déverrouillée.

Le système de verrouillage peut comporter un levier permettant de déplacer manuellement l'organe de verrouillage, de préférence un levier fixé sur l'organe de verrouillage, notamment sur une patte réalisée d'une seule pièce avec l'un des bras précités.

Le frein peut comporter un actionneur électrique permettant de déplacer l'organe de verrouillage, de préférence un électroaimant relié mécaniquement à l'organe de verrouillage pour, lorsqu'il est alimenté en courant, déplacer ce dernier en position de verrouillage, cet électroaimant étant de préférence porté par une platine fixée sur la culasse.

Le ou les éléments de retenue peuvent être fixés rigidement à l'armature, notamment par vissage.

Le ou chaque élément de retenue peut présenter une tête sous laquelle peut s'engager l'organe de verrouillage en position verrouillée. L'organe de verrouillage peut comporter une fourchette venant s'engager sur l'élément de retenue sous ladite tête, lorsque l'armature est en position inactive et lorsque l'organe de verrouillage est déplacé en position verrouillée. Cette fourchette s'oppose au retour de l'armature en position de freinage.

La tête peut être formée avec un écrou et/ou un contre-écrou, notamment un écrou et/ou contre-écrou vissé à une extrémité de la tige précitée de l'organe de retenue.

Le fait de réaliser ainsi la surface de l'organe de retenue servant d'appui, par l'intermédiaire d'une rondelle le cas échéant, sur l'organe de verrouillage, rend très facile de régler le fonctionnement du frein, lequel réglage peut s'effectuer indépendamment du moteur.

Les composants du frein peuvent être assemblés avant le montage du frein sur le moteur, hormis le disque de frein.

Le frein peut comporter un organe de commande manuelle du frein, permettant, lorsque déplacé d'une position de repos à une position d'activation, d'amener l'armature en position écartée du disque de frein. Un organe de rappel de l'organe de commande manuelle peut être prévu pour tendre à ramener l'organe de commande manuelle dans une position de repos.

L'organe de commande manuelle peut comporter un étrier présentant à ses extrémités des ouvertures recevant des éléments de liaison avec l'armature, mobiles avec celle-ci, les éléments de liaison pouvant se déplacer relativement à l'étrier lorsque l'armature passe en position inactive, le déplacement de l'étrier permettant d'entraîner avec lui les éléments de liaison pour amener l'armature en position inactive.

Les éléments de liaison peuvent comporter chacun un goujon et une tête sous laquelle s'étend une extrémité de l'étrier, la tête étant de préférence formée avec un écrou, notamment un écrou à portée sphérique.

L'organe de commande manuelle et le levier peut être sensiblement parallèles lorsque le frein est verrouillé en position inactive, ce qui facilite le repérage visuel de l'état du dispositif lorsqu'une intervention manuelle est nécessaire.

L'invention a encore pour objet un procédé pour verrouiller l'armature du frein d'une machine électrique selon l'invention en position inactive, dans lequel on effectue les étapes successives suivantes :
a) on agit manuellement sur l'organe de commande manuelle ou on alimente électriquement l'électroaimant du frein, pour amener l'armature en position inactive ;
b) pendant que l'organe de commande manuelle est maintenu en position d'activation ou l'électroaimant est alimenté, on agit manuellement sur l'organe de verrouillage pour bloquer l'élément de retenue afin de maintenir l'armature en position inactive, ou on alimente l'actionneur électrique pour déplacer l'organe de verrouillage et bloquer l'élément de retenue afin de maintenir l'armature en position inactive ;
c) on relâche l'organe de commande manuelle pour que ce dernier revienne en position de repos ou on coupe l'alimentation de l'électroaimant, suivant l'opération effectuée au point a), puis on relâche l'organe de verrouillage ou on coupe l'alimentation de l'actionneur électrique, selon l'opération effectuée en b), de sorte que l'élément de retenue maintienne l'armature en position inactive.

L'invention a encore pour objet un procédé de déverrouillage de l'armature du frein d'une machine électrique selon l'invention, comportant les étapes consistant à :
a) agir manuellement sur l'organe de commande manuelle ou alimenter électriquement l'électroaimant du frein, pour amener l'armature en position inactive et libérer l'organe de verrouillage de sa position verrouillée ;
b) relâcher l'organe de commande manuelle ou couper l'alimentation de l'électroaimant suivant l'opération effectuée au point a).

L'invention pourra être mieux comprise à la lecture de la description détaillée qui va suivre, d'un exemple de mise en oeuvre non limitatif de celle-ci, et à l'examen du dessin annexé, sur lequel :
- la figure 1 est une vue schématique en perspective de la partie arrière d'une machine électrique dont le moteur est équipé d'un frein selon l'invention,
- la figure 2 représente de façon partielle et schématique, avec arrachement, des éléments du frein,

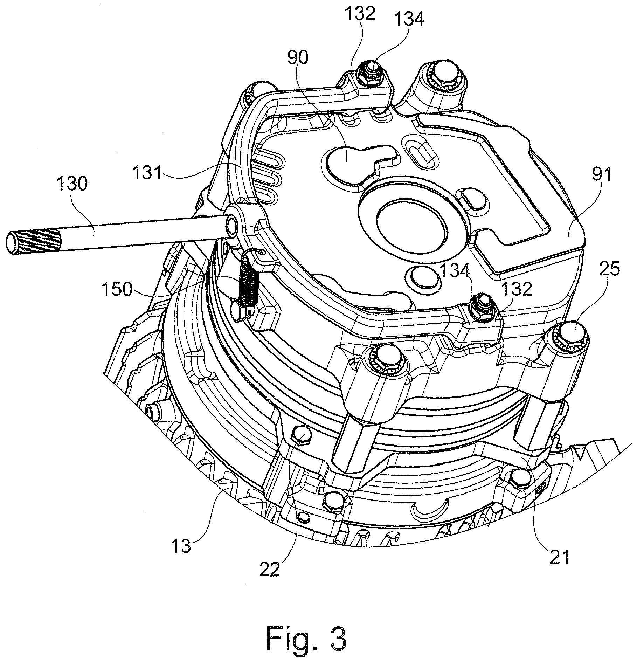

- la figure 3 est une vue analogue à la figure 1, avec enlèvement de certains composants, et
- les figures 4 à 6 représentent des détails du frein.

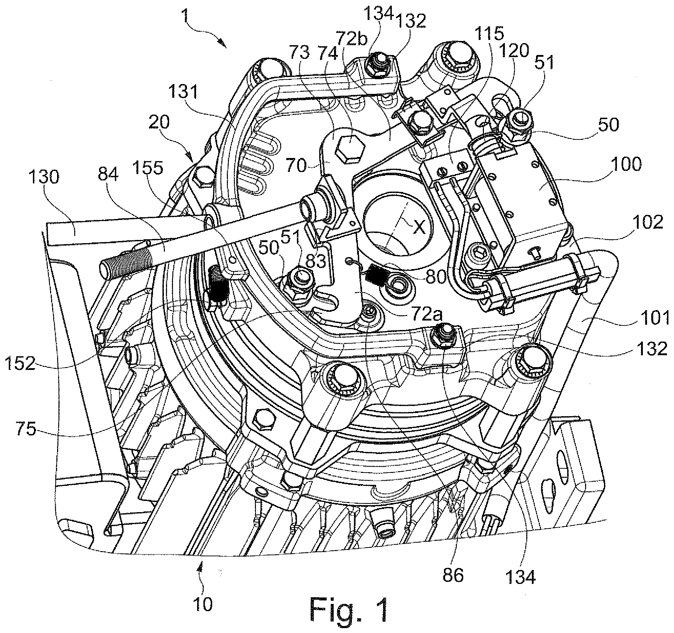

La machine électrique 1 selon l'invention, représentée à la figure 1, comporte un moteur 10 dont seule la partie arrière est représentée et un frein 20 qui est associé à ce moteur.

La machine électrique 1 est par exemple destinée à être montée sur une grue pour entraîner en rotation la flèche relativement à la tour.

La machine électrique 1 peut encore être utilisée sur d'autres installations telles qu'un ascenseur.

Le moteur électrique 10 peut être de tout type connu, synchrone ou asynchrone, à aimants permanents ou non, à stator à bobinage distribué ou concentré, et à rotor intérieur ou extérieur.

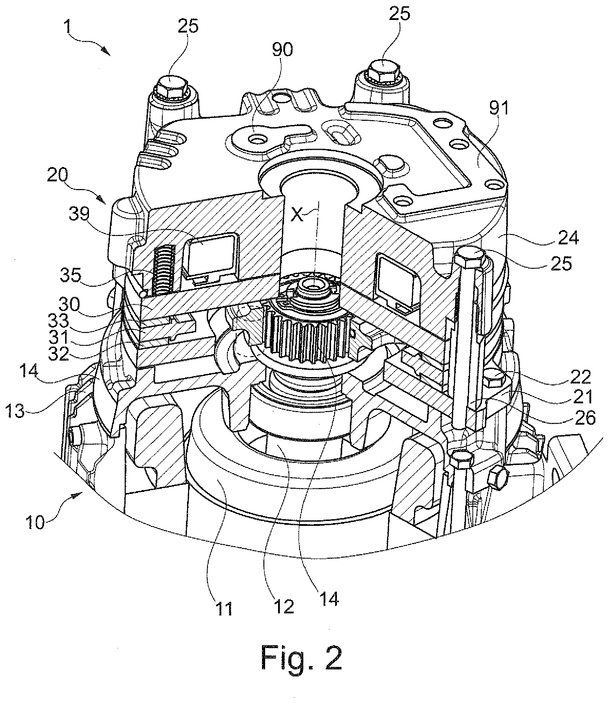

Dans l'exemple illustré, le moteur 10 comporte, comme on peut le voir sur la figure 2 notamment, un rotor intérieur 11 pourvu d'un arbre 12 tournant autour d'un axe de rotation X.

Le rotor 11 tourne à l'intérieur d'un carter 13 sur lequel est fixé le frein. Plus particulièrement, comme illustré à la figure 2 notamment, le carter du moteur peut être fermé à son extrémité arrière par un flasque 14 qui est traversé par l'arbre 12.

Le frein 20 comporte une contre-plaque 21 qui sert à sa fixation sur le moteur 10, par exemple par des vis 22 engagées dans le carter 13.

Le frein comporte une culasse 24 qui est fixée sur la contre-plaque 21 par l'intermédiaire par exemple de vis 25 et d'entretoises 26. La culasse 24 est par exemple réalisée par fonderie en aluminium ou alliage d'aluminium.

Le frein 20 comporte une armature 30 qui est mobile axialement selon l'axe de rotation X de l'arbre 12.

Le frein 20 comporte un disque de frein 31 qui est disposé entre l'armature 30 et la contre-plaque 21, et qui porte des garnitures 32 et 33, destinées respectivement à venir en appui contre la contre-plaque 21 et l'armature 30 lorsque cette dernière est dans une position dite de freinage, étant sollicitée dans cette position par des ressorts de poussée 35, disposés au sein de la culasse 34. Cette dernière loge un électroaimant 39. Lorsque celui-ci est alimenté électriquement, il exerce un champ magnétique qui tend à déplacer l'armature 30 en éloignement de la contre-plaque 21 et ainsi à l'écarter du disque de frein 31. Ce dernier tourne avec l'arbre 12, étant par exemple engagé sur une portion cannelée 14 de l'arbre 12, de façon conventionnelle. La culasse 24 est par exemple réalisée par fonderie en aluminium.

Conformément à l'invention, la machine 1 comporte un système de verrouillage pour maintenir le frein 20 en position débloquée indépendamment de l'alimentation de l'électroaimant 39.

Dans l'exemple considéré, ce système de verrouillage comporte au moins un organe de retenue 50, en l'espèce deux organes de retenue 50, disposés symétriquement l'un de l'autre par rapport à l'axe de rotation X, ces organes de retenue étant visibles sur les figures 1, 5 et 6.

Dans l'exemple décrit, ces organes de retenue 50 comportent chacun une tige 51 dont l'extrémité avant est fixée dans l'armature 30, étant par exemple vissée dans celle-ci ou assemblée autrement avec elle, et donc l'extrémité arrière fait saillie hors de la culasse 24.

La tige 51 est d'axe parallèle à l'axe X de rotation et se déplace avec la culasse 30 parallèlement à l'axe X.

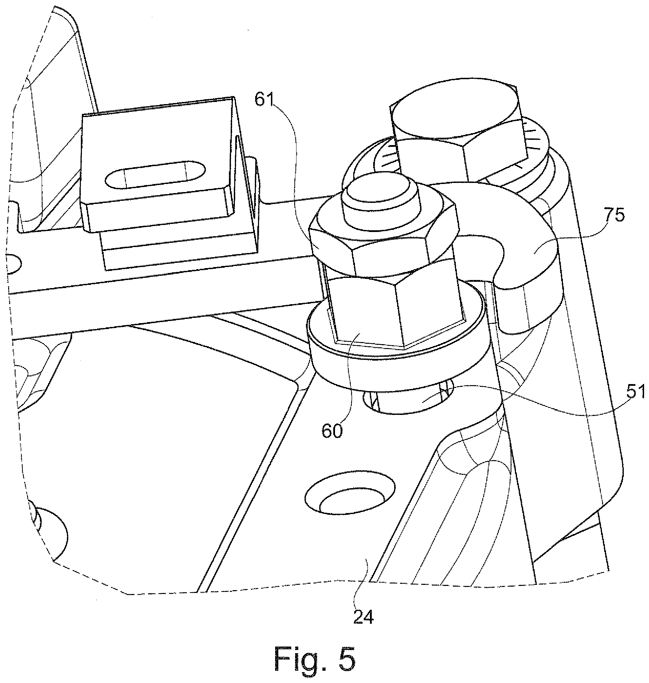

L'extrémité arrière de la tige 51 est filetée et reçoit, comme on peut le voir plus précisément sur la figure 5, un écrou à embase 60 sur lequel est serré un contre-écrou 61. L'ensemble de l'écrou 60 et du contre-écrou 61 forme une tête sous laquelle peut s'engager un organe de verrouillage 70, mobile entre une position déverrouillée, où il est éloigné de la tête de l'organe de retenue 50, qui correspond à la configuration illustrée à la figure 1, et une position de verrouillage de l'organe de retenue où il s'engage sous la tête de celui-ci afin d'empêcher le retour de l'organe de retenue 50 vers l'avant, sous l'effet d'entraînement des ressorts de poussée 35.

Dans l'exemple considéré, comme on le voit plus particulièrement à la figure 1, l'organe de verrouillage comporte deux bras 72a et 72b, qui sont réunis par une portion élargie 73 pourvue d'une ouverture pour le passage d'un pivot 74, permettant à l'organe de verrouillage de pivoter autour d'un axe de rotation parallèle à l'axe X. Ce pivot 74 est par exemple constitué par une vis qui est fixée dans la culasse 24.

On peut voir sur la figure 1 notamment, que le pivot 74 est excentré par rapport à l'axe X.

Chaque bras 72a ou 72b comporte à son extrémité une fourchette 75 qui peut s'engager sur la tige 51 de l'organe de retenue 50 correspondant lorsque la tête de celui-ci s'est déplacée vers l'arrière avec l'armature 30, quand l'électroaimant 39 est alimenté. L'organe de verrouillage 70 est rappelé dans la position déverrouillée représentée à la figure 1 par un organe de rappel élastique qui est constitué, dans l'exemple illustré, par un ressort 80 dont une extrémité est accrochée sur le bras 72a et l'autre extrémité est immobilisée sur la culasse 24.

Dans l'exemple considéré, le même bras 72a que celui sur lequel est accroché le ressort 80 porte une équerre 83 sur laquelle est fixé un levier de commande manuelle 84 dont l'axe longitudinal s'étend sensiblement dans un plan médian de la machine contenant son axe de rotation lorsque l'organe de verrouillage 70 est en position de verrouillage.

Sur la figure 1, l'axe longitudinal du levier 84 fait un angle non nul avec ce plan médian, l'organe de verrouillage étant en position déverrouillée. Cet angle au repos peut être compris entre 5 et 20° par exemple, mieux entre 10 et 15°.

Le bras 72a sur lequel est accroché le ressort 80 peut venir en appui contre une butée 86 au repos, en position déverrouillée comme représenté sur la figure 1. La butée 86 est par exemple formée par une rondelle en caoutchouc fixée sur la culasse 24 par une vis.

On voit sur la figure 2 notamment que la culasse 24 peut présenter des surfaces usinées 90 sur lesquelles repose, avec interposition éventuelle d'une ou plusieurs rondelles, l'organe de verrouillage 70.

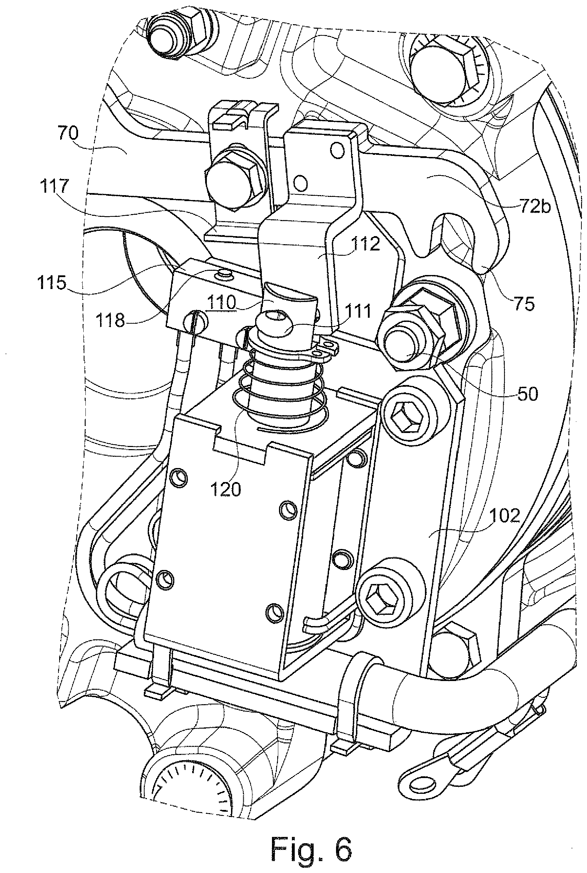

Un système électromécanique comportant un actuateur à électroaimant 100 est prévu pour déplacer l'organe de verrouillage 70 électriquement. L'électroaimant 100 est porté par une platine de support 102 qui peut être fixée par des vis sur une surface de réception usinée 91 de la culasse, visible à la figure 2. L'électroaimant entraîne un axe 110, visible à la figure 6 notamment, qui est relié par l'intermédiaire par exemple d'une goupille 111 et d'une patte coudée 112 au bras 72b.

Un interrupteur 115 peut être prévu, étant fixé sur la culasse 24 de façon à être actionné par le bras 72b. Cet interrupteur peut être relié à des conducteurs électriques d'un câble 101 qui contient également des conducteurs électriques d'alimentation de l'électroaimant 100.

Lorsque l'organe de verrouillage 70 est en position de verrouillage, la patte 117 appuie sur un poussoir 118 de l'interrupteur 115, ce qui établit par exemple un contact électrique et permet de renseigner l'opérateur et tout système associé de commande du fonctionnement du frein de la venue effective en position de verrouillage de l'organe 70.

L'actuateur 100 peut comporter un ressort 120 qui sollicite l'organe de verrouillage 70 en position de déverrouillage en l'absence d'alimentation électrique de l'actuateur.

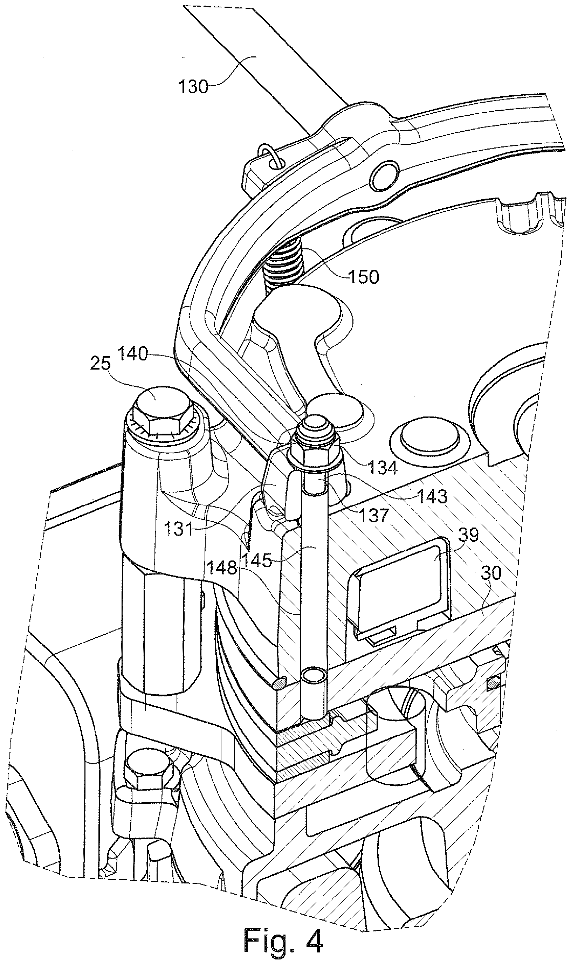

Le frein 20 comporte également un organe de commande manuelle comportant une poignée 130 portée par un étrier 131, dont les extrémités 132 sont reliées par l'intermédiaire d'éléments de liaison 134 à l'armature du frein. Comme on le voit plus particulièrement à la figure 4 notamment, chaque élément de liaison 134 peut comporter un goujon 137 dont l'axe est parallèle à l'axe de rotation X, dont l'extrémité avant est fixée à l'armature 30 et dont l'extrémité arrière porte un écrou avec frein 140. Cet écrou peut être à portée sphérique, et une rondelle également à portée sphérique peut être interposée entre cet écrou et l'étrier 131.

Le goujon 137 peut être guidé axialement par une douille 145 engagée dans un perçage correspondant 148 de l'armature. Ainsi, le goujon 137 coulisse selon l'axe X pour accompagner le déplacement de l'armature 30 et la tête formée par l'écrou avec frein 140 peut s'écarter librement vers l'arrière de l'extrémité 132 de l'étrier lorsque l'électroaimant 39 est alimenté électriquement pour débloquer le frein, lors de l'utilisation normale de celui-ci.

L'étrier 131 est rappelé en position inactive contre la culasse 24 par un ressort 150 qui est par exemple, comme on peut le voir sur la figure 1 notamment, un ressort hélicoïdal dont une extrémité est accrochée à une vis 152 fixée sur la culasse et dont l'autre extrémité est accrochée à une patte 155 formée avec l'étrier 131.

Lorsque l'opérateur tire vers l'arrière sur la poignée 130, l'étrier 131 se déplace vers l'arrière, ce qui entraîne en déplacement également vers l'arrière les éléments de liaison 134 et amène l'armature 30 à se décoller du disque de frein 31.

Le fonctionnement du frein 20 est le suivant.

Pour verrouiller à distance celui-ci en position débloquée, on commence par alimenter électriquement l'électroaimant 39, ce qui amène les éléments de retenue 51 à reculer et conduit à la formation d'un intervalle entre la tête de l'élément de retenue 50 et la culasse 24.

Ensuite, l'actuateur 100 est commandé électriquement pour déplacer l'organe de verrouillage 70 en position verrouillée, la fourchette 75 de chaque bras venant s'engager dans l'intervalle précité sur la tige 51 de l'élément de retenue, sous la tête de celui-ci.

Ensuite, alors que l'organe de verrouillage 70 est maintenu dans cette position, l'électroaimant 39 cesse d'être alimenté, ce qui tend à ramener l'armature 30 vers sa position de freinage, sous l'action des ressorts de poussée 35. Toutefois, l'armature 30 ne peut atteindre le disque de frein, du fait que la tête des organes de retenue vient en appui contre l'organe de verrouillage 70, dont l'épaisseur est suffisante pour qu'un jeu subsiste entre l'armature et le disque de frein.

La traction exercée sur les organes de retenue 50 par les ressorts 35 de rappel de l'armature est suffisante pour que, même quand cesse l'alimentation électrique de l'actuateur 100, les fourchettes 75 des bras 72a, 72b restent bloquées sous les têtes des éléments de retenue. Ainsi, le frein reste en position débloquée en l'absence de toute alimentation électrique, à la fois de l'électroaimant 39 du frein et de l'actuateur 100.

L'interrupteur 115 est actionné, ce qui permet de confirmer à l'opérateur que le frein est bien débloqué, par exemple grâce à l'allumage d'un voyant correspondant, dans la cabine de la grue.

Le frein 20 qui vient d'être décrit offre également la possibilité de l'amener en position débloquée manuellement, indépendamment de toute alimentation électrique de l'électroaimant ou de l'actuateur.

Pour ce faire, l'opérateur tire sur la poignée 130 pour déplacer vers l'arrière l'armature 30 du frein et les éléments de retenue 50. Ensuite, tout en maintenant la traction sur la poignée 130, l'utilisateur agit sur le levier 84, dans le sens horaire sur la figure 1, pour amener les fourchettes 75 des bras 72a et 72b à s'engager sous les têtes des éléments de retenue 50.

Ensuite, tout en maintenant le levier 84 en place, l'utilisateur peut relâcher la traction exercée sur la poignée 130, de façon à amener les éléments de retenue 50 à prendre appui sur les bras, les fourchettes 75 restant ensuite que le levier 84 est relâché, engagées sur les tiges 51 des éléments de retenue 50 et restant bloquées sur celles-ci grâce à la force exercés par les ressorts de poussée 35 sur l'armature 30.

Pour déverrouiller le frein, l'utilisateur peut alimenter l'électroaimant 39, ce qui provoque l'écartement des têtes des éléments de retenue 50 des fourchettes 75 des bras. Le retour de l'organe de verrouillage 70 dans sa position déverrouillée peut s'effectuer alors automatiquement, par le seul effet du ressort de rappel 80, voire éventuellement de l'assistance apportée également par le ressort 120 de l'actuateur 100.

En cas de déblocage manuel, il suffit à l'opérateur de tirer sur la poignée 130 de façon à faire reculer les éléments de retenue 50 et permettre à l'organe de verrouillage 70 de retrouver sa position de repos, en appui contre la butée 86.

Bien entendu, l'invention n'est pas limitée à l'exemple qui vient d'être décrit.

On peut notamment modifier par exemple la forme du levier 84 qui pivote avec l'organe de verrouillage 70.

On peut, le cas échéant, prévoir une commande par câble, notamment de type Bowden, pour agir à distance sur l'organe de verrouillage 70 et/ou l'étrier 131.

On peut superposer plusieurs culasses et disques de frein en prévoyant par exemple plusieurs éléments de retenue associés respectivement à différentes armatures.

On peut avoir un organe de verrouillage avec un seul bras ou plus de deux bras.

L'expression "comportant un" doit être comprise comme étant synonyme de "comprenant au moins un".

## Revendications

1. Frein (20) pour moteur électrique (10), comportant :
- une culasse (24),
- au moins un disque de frein (31,32) destiné à être entraîné en rotation avec l'arbre du moteur électrique,
- au moins une armature (30) mobile axialement relativement à la culasse (24) entre une position de freinage où elle s'applique contre le disque de frein et une position inactive écartée du disque de frein,
- au moins un élément de retenue (50) mobile axialement avec l'armature (30),
- au moins un ressort (35) tendant à maintenir l'armature en position de freinage,
- un électroaimant (39) sollicitant, lorsqu'il est alimenté en courant, l'armature en position inactive, et
- un système de verrouillage de l'armature en position inactive, le système de verrouillage comportant un organe de verrouillage (70) déplaçable entre une position verrouillée où il coopère avec l'élément de retenue (50) pour retenir l'armature en position inactive contre l'action de rappel du ressort (35) et une position déverrouillée de libération de l'armature permettant le retour de l'armature (30) en position de freinage, l'élément de retenue (50) comportant une tige (51) coulissant dans la culasse (24), notamment une tige (51) dépassant axialement de la culasse vers l'arrière, l'organe de verrouillage (70) étant rotatif autour d'un axe de rotation parallèle à celui du moteur, le frein comportant un actionneur électrique permettant de déplacer l'organe de verrouillage.

2. Frein selon la revendication 1, l'organe de verrouillage (70) comportant un bras (72a;72b) coopérant avec l'élément de retenue pour retenir l'armature en position inactive contre l'action de rappel du ressort.

3. Frein selon la revendication 1 ou 2, comportant deux éléments de retenue (50) mobiles avec l'armature, de préférence disposés symétriquement l'un par rapport à l'autre par rapport à l'axe (X) de rotation du moteur, et de préférence encore coopérant avec le même organe de verrouillage (70), de préférence l'organe de verrouillage comportant deux bras (72a,72b) coopérant, en position verrouillée, chacun avec un élément de retenue respectif, ces deux bras étant de préférence réalisés d'une seule pièce l'un avec l'autre.

4. Frein selon l'une quelconque des revendications précédentes, l'organe de verrouillage (70) étant rotatif autour d'un axe non confondu avec celui du moteur.

5. Frein selon l'une quelconque des revendications précédentes, comportant un organe (80) de rappel élastique de l'organe de verrouillage, tendant à ramener l'organe de verrouillage (70) dans sa position déverrouillée de libération de l'armature.

6. Frein selon l'une quelconque des revendications précédentes, comportant une butée (86) contre laquelle repose l'organe de verrouillage en position déverrouillée.

7. Frein selon l'une quelconque des revendications précédentes, le système de verrouillage comportant un levier (84) permettant de déplacer manuellement l'organe de verrouillage (70), de préférence un levier fixé sur l'organe de verrouillage, notamment sur une patte réalisée d'une seule pièce avec l'un (72a) des bras définis à la revendication 3.

8. Frein selon l'une quelconque des revendications précédentes, l'actionneur électrique (100) permettant de déplacer l'organe de verrouillage (70) étant un électroaimant relié mécaniquement à l'organe de verrouillage pour, lorsqu'il est alimenté en courant, déplacer ce dernier en position de verrouillage, cet électroaimant étant de préférence porté par une platine fixée sur la culasse.

9. Frein selon l'une quelconque des revendications précédentes, le ou les éléments de retenue (50) étant fixés rigidement à l'armature, notamment par vissage.

10. Frein selon l'une quelconque des revendications précédentes, le ou chaque élément de retenue (50) présentant une tête sous laquelle peut s'engager l'organe de verrouillage en position verrouillée, notamment une fourchette (75) venant s'engager sur l'élément de retenue sous ladite tête, notamment sur la tige (51), lorsque l'armature est en position inactive et lorsque l'organe de verrouillage est déplacé en position verrouillée, cette fourchette (75) s'opposant au retour de l'armature (30) en position de freinage, de préférence la tête étant formée par un écrou (60) et/ou un contre-écrou (61), notamment un écrou et/ou contre-écrou vissés à une extrémité de la tige (51).

11. Frein selon l'une quelconque des revendications précédentes, comportant un organe (130,131) de commande manuelle du frein, permettant, lorsque déplacé d'une position de repos à une position d'activation, d'amener l'armature (30) en position écartée du disque de frein, et le frein comportant de préférence (150) un organe de rappel de l'organe de commande manuelle, tendant à ramener celui-ci dans une position de repos, de préférence l'organe de commande manuelle comportant un étrier (131) présentant à ses extrémités des ouvertures recevant des éléments de liaison (140) avec l'armature, mobiles avec celle-ci, les éléments de liaison (140) pouvant se déplacer relativement à l'étrier lorsque l'armature passe en position inactive, le déplacement de l'étrier permettant d'entraîner avec lui les éléments de liaison pour amener l'armature en position inactive, les éléments de liaison (140) comportant notamment un goujon (137) et une tête (134) sous laquelle s'étend une extrémité (132) de l'étrier (131).

12. Machine électrique comportant un moteur électrique (10) et un frein (20) tel que défini aux revendications 1 à 11.

13. Grue comportant une flèche mobile relativement à une tour, et une machine électrique telle que définie à la revendication 12 pour déplacer en rotation la flèche par rapport à la tour.

14. Procédé pour verrouiller l'armature du frein d'une machine électrique telle que définie à la revendication 12 en position inactive, dans lequel on effectue les étapes successives suivantes :
a) on agit manuellement sur l'organe de commande manuelle selon la revendication 11 ou on alimente électriquement l'électroaimant du frein, pour amener l'armature en position inactive ;
b) pendant que l'organe de commande manuelle est maintenu en position d'activation ou l'électroaimant est alimenté, on agit manuellement sur l'organe de verrouillage pour bloquer l'élément de retenue afin de maintenir l'armature en position inactive, ou on alimente l'actionneur électrique de la revendication 8 pour déplacer l'organe de verrouillage et bloquer l'élément de retenue afin de maintenir l'armature en position inactive ;
c) on relâche l'organe de commande manuelle pour que ce dernier revienne en position de repos ou on coupe l'alimentation de l'électroaimant, suivant l'opération effectuée au point a), puis on relâche l'organe de verrouillage ou on coupe l'alimentation de l'actionneur électrique, selon l'opération effectuée en b), de sorte que l'élément de retenue maintienne l'armature en position inactive.

15. Procédé de déverrouillage de l'armature du frein d'une machine électrique telle que définie à la revendication 12, comportant les étapes consistant à :
a) agir manuellement sur l'organe de commande manuelle selon la revendication 11 ou alimenter électriquement l'électroaimant (39) du frein, pour amener l'armature (30) en position inactive et libérer l'organe de verrouillage de sa position verrouillée ;
b) relâcher l'organe de commande manuelle ou couper l'alimentation de l'électroaimant suivant l'opération effectuée au point a).

## Patentansprüche

1. Bremse (20) für einen elektrischen Motor, mit:
- einem Joch (24),
- wenigstens einer Bremsscheibe (31, 32), die dazu bestimmt ist, mit der Welle des elektrischen Motors zur Drehung angetrieben zu werden,
- wenigstens einem Anker (30), der relativ zu dem Joch (24) axial zwischen einer Bremsposition, in der er an der Bremsscheibe anliegt, und einer inaktiven Position beweglich ist, in der er von der Bremsscheibe abgerückt ist,
- wenigstens einem Halteelement (50), das axial mit dem Anker (30) beweglich ist,
- wenigstens einer Feder (35), die die Tendenz hat, den Anker in der Bremsposition zu halten,
- einem Elektromagneten (39), der, wenn er mit Strom gespeist ist, den Anker in der inaktiven Position hält, und
- einem Verriegelungssystem zur Verriegelung des Ankers in der inaktiven Position, welches Verriegelungssystem ein Verriegelungsorgan (70), das zwischen einer Verriegelungsstellung, in der es mit dem Halteelement (50) zusammenwirkt, um den Anker entgegen der Rückstellkraft der Feder (35) in der inaktiven Position zu halten, und einer entriegelten Position zu Freigabe des Ankers beweglich ist, in welcher der Anker (30) in die Bremsposition zurückkehren kann, wobei das Halteelement (50) eine in dem Joch (24) verschiebbare Stange (51) aufweist, insbesondere eine Stange (51), die axial nach hinten über das Joch übersteht, wobei das Verriegelungsorgan (70) um eine zu der Drehachse des Motors parallele Achse drehbar ist und die Bremse einen elektrischen Stellantrieb aufweist, der es erlaubt, das Verriegelungsorgan zu verstellen.

2. Bremse nach Anspruch 1, bei der das Verriegelungsorgan (70) einen Arm (72a; 72b) aufweist, der mit dem Halteelement zusammenwirkt, um den Anker entgegen der Rückstellkraft der Feder in der inaktiven Position zu halten.

3. Bremse nach Anspruch 1 oder 2, mit zwei zusammen mit dem Anker beweglichen Halteelementen (50), die vorzugsweise in Bezug auf die Drehachse (X) des Motors symmetrisch zueinander angeordnet sind und vorzugsweise auch mit demselben Verriegelungsorgan (70) zusammenwirken, wobei das Verriegelungsorgan vorzugsweise zwei Arme (72, 72b) aufweist, die in der verriegelten Position jeweils mit einem Halteelement zusammenwirken, wobei diese beiden Arme vorzugsweise in einem Stück miteinander ausgebildet sind.

4. Bremse nach einem der vorstehenden Ansprüche, bei der das Verriegelungsorgan (70) um eine Achse drehbar ist, die nicht mit der Drehachse des Motors zusammenfällt.

5. Bremse nach einem der vorstehenden Ansprüche, mit einem elastischen Rückstellorgan (80) für das Verriegelungsorgan, welches Rückstellorgan die Tendenz hat, das Verriegelungsorgan (70) in seine den Anker freigebende entriegelte Position zurückzustellen.

6. Bremse nach einem der vorstehenden Ansprüche, mit einem Anschlag (86), an welchem das Verriegelungsorgan in der entriegelten Position anliegt.

7. Bremse nach einem der vorstehenden Ansprüche, bei der das Verriegelungssystem einen Hebel (84) aufweist, der es erlaubt, das Verriegelungsorgan (70) manuell zu verstellen, vorzugsweise einen Hebel, der an dem Verriegelungsorgan befestigt ist, insbesondere an einer Lasche, die in einem Stück mit einem (72a) der in Anspruch 3 definierten Arme ausgebildet ist.

8. Bremse nach einem der vorstehenden Ansprüche, bei der der elektrische Stellantrieb (100), der die Verstellung des Verriegelungsorgans (70) erlaubt, ein Elektromagnet ist, der mechanisch mit dem Verriegelungsorgan verbunden ist, um, wenn er mit Strom gespeist ist, das Verriegelungsorgan in die verriegelte Position zu bringen, wobei dieser Elektromagnet vorzugsweise an einer Platine gehalten ist, die an dem Joch befestigt ist.

9. Bremse nach einem der vorstehenden Ansprüche, bei der das oder die Halteelemente (50) starr, insbesondere durch Verschraubung, an dem Anker befestigt sind.

10. Bremse nach einem der vorstehenden Ansprüche, bei der das oder jedes Halteelement (50) einen Kopf aufweist, unter welchem das Verriegelungsorgan in der verriegelten Position eingreifen kann, wobei insbesondere eine Gabel (75) unter dem genannten Kopf mit dem Halteelement in Eingriff tritt, insbesondere auf der Stange (51), wenn sich der Anker in der inaktiven Position befindet und wenn das Verriegelungsorgan in die verriegelte Position verstellt wird, wobei diese Gabel (75) der Rückkehr des Ankers (30) in die Bremsposition entgegenwirkt, wobei der Kopf vorzugsweise durch eine Mutter (60) und/oder eine Kontermutter (61) gebildet wird, insbesondere eine Mutter und/oder Kontermutter, die auf ein Ende der Stange (51) aufgeschraubt ist.

11. Bremse nach einem der vorstehenden Ansprüche, mit einem handbetätigten Steuerorgan (130, 131) für die Bremse, das, wenn es aus einer Ruhestellung in eine Aktivierungsstellung bewegt wird, es erlaubt, den Anker (30) in die von der Bremsscheibe abgerückte Position zu bringen, und die Bremse vorzugsweise (150) ein Rückstellorgan für das handbetätigte Steuerorgan aufweist, wobei das Rückstellorgan die Tendenz hat, das Steuerorgan in eine Ruhestellung zurückzustellen, wobei das handbetätigte Steuerorgan vorzugsweise einen Bügel (131) aufweist, der an seinen Enden Öffnungen aufweist, die mit diesem Bügel bewegliche Elemente (140) zur Verbindung mit den Anker aufnimmt, wobei diese Verbindungselemente (140) sich relativ zu dem bügel bewegen können, wenn der Anker in die inaktive Position übergeht, wobei die Bewegung des Bügels es erlaubt, die Verbindungselemente mitzunehmen, um den Anker in die inaktive Position zu bringen, wobei die Verbindungselemente (140) insbesondere einen Bolzen (137) und einen Kopf (134) aufweisen, unter dem sich ein Ende (132) des Bügels (131) erstreckt.

12. Elektrische Maschine mit einem elektrischen Motor (10) und einer Bremse (20), wie sie in den Ansprüchen 1 bis 11 definiert ist.

13. Kran mit einem Ausleger, der relativ zu einem Turm beweglich ist, und mit einer elektrischen Maschine nach Anspruch 12 zum Verdrehen des Auslegers relativ zu dem Turm.

14. Verfahren zur Verriegelung eines Ankers der Bremse einer elektrischen Maschine nach Anspruch 12 in der inaktiven Position, bei dem nacheinander die folgenden Schritte ausgeführt werden:
a) man betätigt manuell das handbetätigte Steuerorgan nach Anspruch 11 oder man steuert elektrisch den Elektromagneten der Bremse an, um den Anker in die inaktive Position zu bringen;
b) während das handbetätigte Steuerorgan in der Aktivierungsposition gehalten wird oder der Elektromagnet bestromt ist, betätigt man manuell das Verriegelungsorgan, um das Halteelement zu blockieren, um den Anker in der inaktiven Position zu halten, oder man aktiviert den elektrischen Stellantrieb nach Anspruch 8, um das Verriegelungsorgan zu bewegen und das Halteelement zu blockieren, um den Anker in der inaktiven Position zu halten;
c) man lässt das handbetätigte Steuerorgan los, damit dieses Steuerorgan in die Ruhestellung zurückkehrt, oder man unterbricht die Stromversorgung des Elektromagneten im Anschluss an die in Schritt a) ausgeführte Operation und lässt dann das Verriegelungsorgan los oder unterbricht die Stromversorgung des elektrischen Stellantriebs gemäß der in Schritt b) ausgeführten Operation, so dass das Halteelement den Anker in der inaktiven Position hält.

15. Verfahren zur Entriegelung des Ankers der Bremse einer elektrischen Maschine nach Anspruch 12, mit den Schritten, die bestehen in:
a) manuelle Betätigung des handbetätigten Steuerorgans gemäß Anspruch 11 oder elektrische Speisung des Elektromagneten (39) der Bremse, um den Anker (30) in die inaktive Position zu bringen und das Verriegelungsorgan aus seiner verriegelten Position zu befreien;
b) Loslassen des handbetätigten Steuerorgans oder Unterbrechen der Stromversorgung des Elektromagneten im Anschluss an die in Schritt a) ausgeführte Operation.

## Claims

1. A brake (20) for an electric motor (10), comprising:
- a yoke (24),
- at least one brake disk (31,32) intended to be rotated with the shaft of the electric motor,
- at least one armature (30) able to move axially relative to the yoke (24) between a braking position in which it presses against the brake disk and an inactive position away from the brake disk,
- at least one retaining element (50) able to move axially with the armature (30),
- at least one spring (35) tending to keep the armature in the braking position,
- electromagnet (39) which, when supplied with current, urges the armature into the inactive position, and
- a locking system for locking the armature in the inactive position, the locking system comprising a locking member (70) that can be moved between a locked position in which it collaborates with the retaining element (50) to hold the armature in the inactive position against the return action of the spring (35) and an unlocked position in which the armature is released allowing the armature (30) to return to the braking position, the retaining element (50) comprising a rod (51) sliding in the yoke (24), notably a rod (51) protruding axially beyond the yoke in the rearward direction, the locking member (70) being able to rotate about an axis of rotation parallel to that of the motor, the brake comprising an electric actuator allowing the locking member to be moved.

2. The brake as claimed in claim 1, the locking member (70) comprising an arm (72a;72b) collaborating with the retaining element in order to keep the armature in the inactive position against the return action of the spring.

3. The brake as claimed in claim 1 or 2, comprising two retaining elements (50) able to move with the armature, preferably arranged symmetrically with respect to one another about the axis (X) of rotation of the motor and, preferably too, collaborating with the same locking member (70), preferably the locking member comprising two arms (72a,72b) each collaborating, in the locked position, with a respective retaining element, these two arms preferably being produced as a single piece with one another.

4. The brake as claimed in any one of the preceding claims, the locking member (70) being able to rotate about an axis that does not coincide with that of the motor.

5. The brake as claimed in any one of the preceding claims, comprising an elastic return member (80) for elastically returning the locking member, tending to return the locking member (70) to its unlocked position in which it releases the armature.

6. The brake as claimed in any one of the preceding claims, comprising an end stop (86) against which the locking member rests in the unlocked position.

7. The brake as claimed in any one of the preceding claims, the locking system comprising a lever (84) that allows the locking member (70) to be moved manually, preferably a lever fixed to the locking member, notably to a lug made as one piece with one (72a) of the arms defined in claim 5.

8. The brake as claimed in one of the preceding claims, the electric actuator (100) that allows the locking member (70) to be moved being an electromagnet mechanically connected to the locking member so that when supplied with current it moves this member into the locking position, this electromagnet preferably being borne by a mounting plate fixed to the yoke.

9. The brake as claimed in any one of the preceding claims, the retaining element or elements (50) being fixed rigidly to the armature, notably by screwing.

10. The brake as claimed in any one of the preceding claims, the or each retaining element (50) having a head under which may be engaged the member for locking in the locked position, notably a fork (75) that engages over the retaining element under said head, notably over the rod (51), when the armature is in the inactive position and when the locking member is moved into the locked position, this fork (75) opposing the return of the armature (30) to the braking position, preferably the head being formed by a nut (60) and/or a lock nut (61), notably a nut and/or lock nut which are screwed onto one end of the rod (51).

11. The brake as claimed in any one of the preceding claims, comprising a member (130,131) for manual control of the brake making it possible, when moved from a rest position into an activation position, to bring the armature (30) into a position away from the brake disk, and the brake preferably comprising (150) a return member for returning the manual control member, tending to return the latter to a rest position, preferably the manual control member comprising a caliper (131) which at its ends has openings accepting connecting elements (140) for connecting with the armature, able to move therewith, the connecting elements (140) being able to move relative to the caliper when the armature enters the inactive position, the movement of the caliper being able to take with it the connecting elements so as to bring the armature into the inactive position, the connecting elements (140) comprising notably a stud (137) and a head (134) under which one end (132) of the caliper (131) extends.

12. An electric machine comprising an electric motor (10) and a brake (20) as defined in claims 1 to 11.

13. A crane comprising a jib able to move relative to a tower and an electric machine as defined in claim 12 for moving the jib in rotation with respect to the tower.

14. A method for locking the armature of the brake of an electric machine as defined in claim 12 in an inactive position, in which the following successive steps are performed:
a) the manual control member as claimed in claim 11 is operated manually or the electromagnet of the brake is electrically powered in order to bring the armature into the inactive position;
b) while the manual control member is kept in the activation position or the electromagnet is powered, the locking member is operated manually in order to block the retaining element in order to keep the armature in the inactive position, or the electric actuator of claim 8 is powered so as to move the locking member and block the retaining element in order to keep the armature in the inactive position;
c) the manual control member is released so that it returns to the rest position or the supply of power to the electromagnet is cut off, according to the operation performed in point a), then the locking member is released or the supply of power to the electric actuator is cut off, depending on the operation performed at b), so that the retaining element keeps the armature in the inactive position.

15. A method for unlocking the armature of the brake of an electric machine as defined in claim 12, comprising the steps involving:
a) acting manually on the manual control member as claimed in claim 11 or electrically powering the electromagnet (39) of the brake, in order to bring the armature (30) into an inactive position and free the locking member from its locked position;
b) releasing the manual control member or cutting off the supply of power to the electromagnet, according to the operation performed at point a).
